# EUROPÄISCHE PATENTANMELDUNG

(11) **EP 0 573 831 A1**
(43) Veröffentlichungstag der Anmeldung: **15.12.1993**
(21) Anmeldenummer: 93108245.7
(22) Anmeldetag: 21.05.1993
(51) Int. Cl.: G01L 5/04, G01L 5/10

(54) **Messgerät zur Anzeige der Belastungsgrenze von Seilen und dergleichen**

(30) Priorität: 11.06.1992 DE 4218991
(71) Anmelder: Paul Vahle GmbH & Co. KG, D-59174 Kamen (DE)
(72) Erfinder: Schafflick, Rolf Dieter, Dipl.-Ing., W-4712 Werne (DE)
(74) Vertreter: Henfling, Fritz, Dipl.-Ing.

(57) **Zusammenfassung**

Für ein einem Seil (41) oder dergleichen zuzuordnendes, die Belastungsgrenze des Seiles anzeigenden Meßgerät, bei dem die auf das ausgelenkte Seil (41) einwirkende Last eine auf einen sich quer zum Seil (41) erstreckenden Meßstab (34) einwirkende Kraftkomponente hervorruft, wird als Meßstab (34) ein die Meßgenauigkeit des Gerätes beeinträchtigende Biege- und Torsionsbeanspruchungen vermeidender Druckstab vorgesehen, der sich dann auch leichter auswechseln läßt als ein Zugstab.

## Beschreibung

Die Erfindung betrifft ein Meßgerät zur Anzeige der Belastungsgrenze von Seilen und dergleichen, der im Oberbegriff des Anspruchs 1 umrissenen Gattung. Das Prinzip eines solchen Meßgeräts ist der DE-PS 32 12 890 zu entnehmen.

Bei dem Meßgerät nach der DE-PS 32 12 890 ist der Meßstab einerseits am Boden der den Meßstab aufnehmenden Aufnahme befestigt und andererseits an einem sich in der Aufnahme führenden Kolben, dessen Überstand über die Aufnahme als am gegen die Rollen ausgelenkten Seil angesetztes Klemmstück ausgebildet ist. Zunehmende Belastung des Seils führt zu einer Reduzierung der Auslenkung des Seils und einhergehend damit zu einer Dehnung des Meßstabs, von dem beim Erreichen bzw. Überschreiten der zulässigen Seilbelastung in an sich bekannter Weise ein ein Signal auslösender Impuls ausgeht. Hierbei wird die Meßgenauigkeit dadurch beeinträchtigt, daß der eingespannte Meßstab zusätzlich zu der auf ihn im Belastungsfall einwirkenden Zugkraft Biege- und Torsionsbeanspruchungen unterworfen ist. Des weiteren erweist sich das von Fall zu Fall erforderliche Auswechseln des Meßstabes bei der Lösung nach der DE-PS 32 12 890 als relativ schwierig, da der Meßstab einerseits mit dem Boden der Aufnahme und andererseits mit dem sich in der Aufnahme führenden Kolben verbunden ist und diese Verbindung zum Auswechseln des Meßstabes gelöst werden muß, was in der Einbausituation des Meßgerätes nicht ohne weiteres möglich ist. Aus der US-PS 2 645 121 ist bekannt, daß sich die Anzeige der Belastungsgrenze etwa von Seilen sowohl über die Dehnung eines Kraftmeßfühlers als auch über seine Stauchung hervorrufen läßt. Im einen wie im anderen Fall kann es auch hierbei zu einer Beeinträchtigung der Meßgenauigkeit kommen, da sowohl der impulsauslösende Zugstab auch der impulsauslösende Druckstab eingespannt ist.

Ausgehend vom Stand der Technik liegt der Erfindung das Bedürfnis nach einem solchen eine größere Meßgenauigkeit aufweisenden Meßgerät zugrunde.

Die Aufgabe wird erfindungsgemäß bei einem gattungsgemäßen Meßgerät durch eine Ausgestaltung entsprechend dem kennzeichnenden Teil des Anspruchs 1 gelöst.

Der nach der Erfindung als Kraftmeßfühler vorgesehene, sich am Boden der Aufnahme abstützende Druckstab, auf den anderen Ends der von der Seilklemme ausgehende, sich in die Aufnahme hineinerstreckende Ansatz einwirkt, ist im Belastungsfall weder einer Biegebeanspruchung noch einer Torsionsbeanspruchung unterworfen, auf ihn wirken im Belastungsfall ausschließlich von der Streckung des Seils herrührende Druckkräfte ein, die bei Erreichen der Belastungsgrenze des Seils zur das Signal auslösenden Impulsgabe führen. Das erfindungsgemäß ausgelegte Meßgerät zeichnet sich somit durch die angestrebte größere Meßgenauigkeit aus.

Ausgestaltungen der Erfindung ergeben sich aus den Unteransprüchen.

Eine bevorzugte Ausführungsform des Meßgerätes weist die Merkmale des Anspruchs 8 auf. Hierbei läßt sich der Meßstab ohne weiteres allein durch Lösen des lösbar an dem Aufnahmegehäuse angesetzten Gehäusebodens auswechseln. Damit wird es in vorteilhafter Weise möglich, den Meßstab im Einbauzustand des Gerätes zu wechseln. Die leichte Auswechselbarkeit des Meßstabes eröffnet dann auch die Möglichkeit der Anpassung des Meßgerätes an geänderte Belastungsfälle über den Meßstab selbst. Die Fertigung des Meßgerätes, insbesondere des Bestandteil des Gerätes bildenden Kraftmeßfühlers gestaltet sich dann auch einfacher.

In der Zeichnung ist die Erfindung anhand eines Ausführungsbeispieles weitergehend erläutert. Es zeigen:
- Figur 1: das einem Seil zugeordnete neue Meßgerät in Seitenansicht, teilweise im Schnitt,
- Figur 2: eine Ansicht des Meßgeräts in Richtung des Pfeiles II in Figur 1 unter Fortlassung des Seiles,
- Figur 3: einen Schnitt nach Linie III-III in Figur 1, auch wieder unter Fortlassung des Seils.

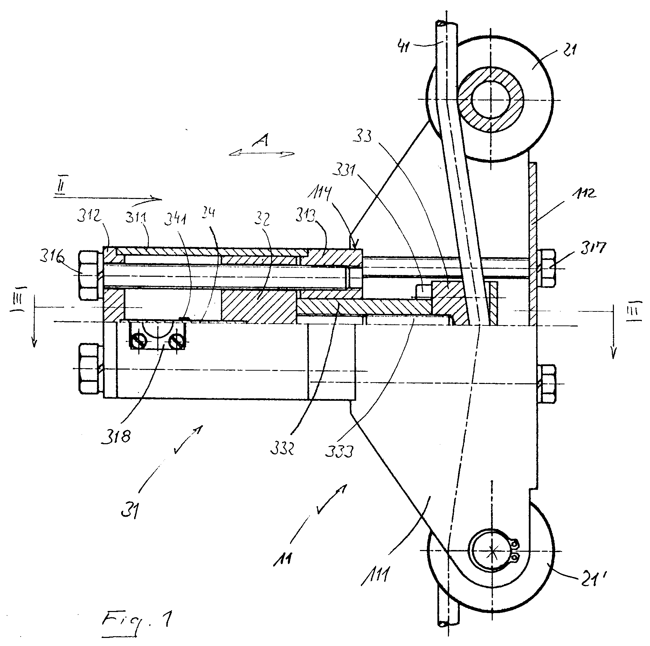

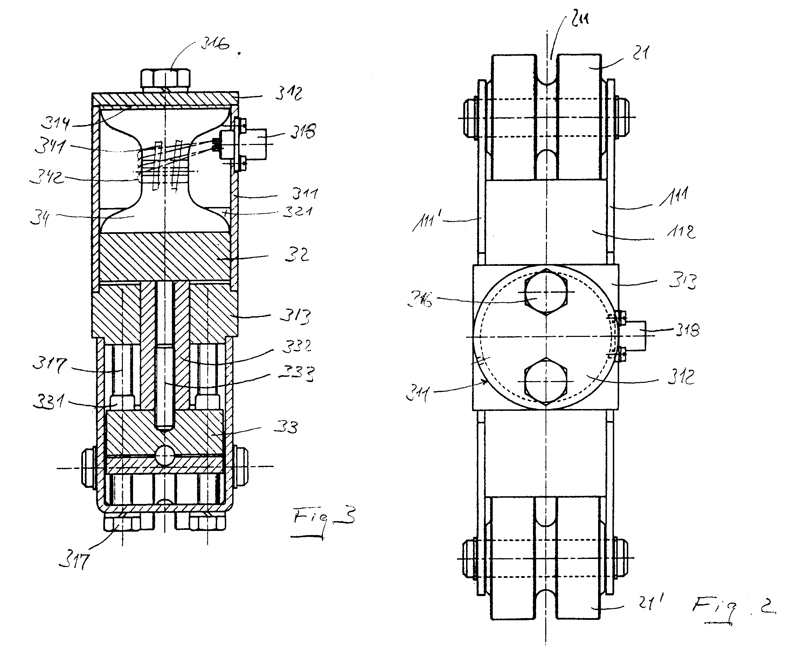

In den Endbereichen des von den Wangen 111 und 111' sowie dem Steg 112 gebildeten Rahmens 11 sind die profilierten (211) Rollen 21 und 21' leichtgängig, drehbeweglich gelagert. Auf der vom Steg 112 des Rahmens 11 abgekehrten Seite ist an dem Rahmen 11 das Gehäuse 31 angesetzt, das aus dem Hohlzylinder 311, der Bodenplatte 312 und der Kopfplatte 313 besteht, in dem sich zum einen ein im Sinne des Doppelpfeiles A in Figur 1 verlagerbarer Kolben 32, und zum anderen ein sich einerseits am Boden 312 des Gehäuses 31 und andererseits am Kolben 32 abstützender Druckmeßstab 34 befinden. Auf den Kolben 32 wirkt ein sich durch die Kopfplatte 313 des Gehäuses 31 erstreckender, von einem am Seil 41 angesetzten mittels Spannschrauben 331 gegenüber dem Seil festgelegten Klemmstück 33 ausgehender Stößel 332 ein. Dieser Stößel 332 ist über eine Gewindestange 333 mit dem Klemmstück 33 zusammengefaßt, die es erlaubt, die wirksame Stößellänge zu variieren.

Der Druckmeßstab 34 führt sich in Rücksprüngen 314 und 323 der Bodenplatte 312 des Gehäuses 31 einerseits und des Kolbens 32 andererseits. Die Gehäusebestandteile, also der Hohlzylinder 311, die Bodenplatte 312 und die Kopfplatte 313, sind zusammengefaßt durch von der Bodenplatte 312 her angesetzte, sich durch den Kolben 32 erstreckende, in die Kopfplatte 313 geschraubte Maschinenschrauben 316. Das Gehäuse 31 ist gegenüber dem Rahmen 11 des Meßgeräts festgelegt, durch sich durch den Steg 112 des Rahmens 11 erstreckende, in die sich in Rücksprünge 114 in den Wangen 111, 111'des Rahmens 11 einfügende Kopfplatte 313 des Gehäuses 31 geschraubte Maschinenschrauben 317.

Auf dem Druckmeßstab 34 befindet sich in an sich bekannter Weise mindestens ein Meßgitter 341, das über eine durch die Durchführung 318 in der Gehäusewandung 311 verlaufende Leitung (342) an einem überwachungsgerät liegt. Bei einer zu starken Belastung des Seils 41, die zu einer Stauchung des Druckmeßstabes 34 und damit des Meßgitters 341 führt, geht von dem Meßgitter 341 ein das Ansprechen eines an sich bekannten, nicht dargestellten überwachungsgeräts bewirkender Impuls aus.

Das neue Meßgerät ist grundsätzlich auch in Zusammenhang mit laufenden Seilen einsetzbar. Dann tritt bei lagefixierten Meßgeräten an die Stelle des mit seinem Ansatz auf den Druckmeßstab einwirkenden Klemmstücks eine Rollenführung für das Seil.

## Patentansprüche

1. Meßgerät zur Anzeige der Belastungsgrenze von Seilen und dergleichen, bestehend aus einem Rahmen (11) mit in dessen Endbereichen gelagerten, das Seil (41) hinterfangenden profilierten einstellbeweglichen Gleitstücken (21, 21'), von dem in im wesentlichen übereinstimmenden Abstand von den Gleitstücken (21, 21') eine sich im wesentlichen unter einem rechten Winkel zur Seite weg erstreckende Aufnahme (31) für einen Kraftmeßfühler ingestalt eines Meßstabes (34) mit ihm zugeordetem Impulsauslöser (341) ausgeht, mit dem sich ein sich in die Aufnahme (31) hinein erstreckender, sich darin führender, von einer am Seil (41) angesetzten Seilklemme (33) ausgehender Ansatz in Wechselwirkung befindet, dadurch gekennzeichnet, daß der Kraftmeßfühler ein sich am Boden (312) der sich nach der von den Rollen (21, 21') abgekehrten Seite hin erstreckenden Aufnahme (31) abstützender Druckmeßstab (34) ist, gegen den auf der vom Boden (312) der Aufnahme (31) abgekehrten Seite (71) ein sich in der Aufnahme (31) führendes Druckstück (32) anliegt, auf das der von der am Seil (41) angesetzten, das Seil (41) nach der von der Aufnahme (31) abgekehrten Seite hin auslenkenden Seilklemme (33) ausgehende, sich in die Aufnahme (31) hinein erstreckende Ansatz (332) einwirkt.

2. Meßgerät nach Anspruch 1, dadurch gekennzeichnet, daß das Druckstück (32) und der von der Seilklemme (33) ausgehende Ansatz (332) zusammengefaßt sind.

3. Meßgerät nach Anspruch 1, gekennzeichnet durch eine einstückige Ausbildung des Druckstückes (32) und des von der Seilklemme (33) ausgehenden Ansatzes (332).

4. Meßgerät nach einem der Ansprüche 1 bis 3, gekennzeichnet durch Rücksprünge (314, 321) im Boden (312) der Aufnahme (31) und im Druckstück (32), in die sich der Druckstab (34) einfügt.

5. Meßgerät nach einem der Ansprüche 1 bis 4, gekennzeichnet durch einen Ansatz (332) mit einstellbarem Überstand über die Seilklemme (33).

6. Meßgerät nach einem der Ansprüche 1 bis 5, gekennzeichnet durch einen ein U-Profil aufweisenden Träger (11), in dessen Schenkeln (111, 111') die profilierten einstellbeweglichen Gleitstücke (21, 21') für das Seil (41) gelagert sind.

7. Meßgerät nach einem der Ansprüche 1 bis 6, gekennzeichnet durch das Seil (41) hinterfangende Rollen (21, 21').

8. Meßgerät nach Anspruch 6 oder Anspruch 7, dadurch gekennzeichnet, daß der Steg (112) des ein U-Profil aufweisenden Trägers (11)^ in den Endbereichen ausgeklinkt ist.

9. Meßgerät nach einem der Ansprüche 1 bis 8, dadurch gekennzeichnet, daß die Aufnahme (31) für den Druckstab (34) aus einer Hülse (311), einem an der Hülse (311) angesetzten Boden (312) und einer an der Hülse (311) angesetzten, einen Durchgang für den von der Seilklemme (33) ausgehenden Ansatz (332) aufweisenden Kopfplatte (313) besteht, sowie Hülse (311), Boden (312) und Kopfplatte (313) durch sich durch den Boden (312) und die Hülse (311) erstreckende, in den Deckel (313) geschraubte Spannschrauben (316) zusammengefaßt sind.

10. Meßgerät nach einem der Ansprüche 6 bis 9, dadurch gekennzeichnet, daß die Aufnahme (31) am Träger (11) durch sich durch den Steg (112) des Trägers (11) erstreckende, in die Kopfplatte (313) der Aufnahme (31) geschraubte Spannschrauben (317) festgelegt ist.

11. Meßgerät nach einem der Ansprüche 1 bis 10, dadurch gekennzeichnet, daß die Kopfplatte (313) der am Rahmen (11) angesetzten Aufnahme (31) sich in Rücksprünge (114) in den Wangen (111, 111') des Trägers (11) einfügt.
